# EUROPÄISCHE PATENTSCHRIFT

(11) **EP 4 162 215 B1**
(45) Veröffentlichungstag und Bekanntmachung des Hinweises auf die Patenterteilung: **17.07.2024**
(21) Anmeldenummer: 21731093.7
(22) Anmeldetag: 02.06.2021
(51) Int. Cl.: F25B 9/00

(54) **VERFAHREN UND VORRICHTUNG ZUM KRYOGENEN KÜHLEN EINES VERBRAUCHERS**
METHOD AND DEVICE FOR CRYOGENIC COOLING OF A CONSUMER
PROCÉDÉ ET DISPOSITIF DE REFROIDISSEMENT CRYOGÉNIQUE D'UN CONSOMMATEUR

(30) Priorität: 06.06.2020 DE 102020003424
(43) Veröffentlichungstag der Anmeldung: 12.04.2023
(73) Patentinhaber: Messer SE & Co. KGaA, 65812 Bad Soden (DE)
(72) Erfinder: SCHLOTMANN, Alexander, 47803 Krefeld (DE); HERZOG, Friedhelm, 47803 Krefeld (DE); KUTZ, Thomas, 41379 Brüggen-Born (DE)
(86) Internationale Anmeldenummer: PCT/EP2021/064834
(87) Internationale Veröffentlichungsnummer: WO 2021/245157

(56) Entgegenhaltungen:
- DE-A1- 19 922 364
- DE-B4- 19 922 364
- DE-T2- 69 629 461
- DE-T2- 69 629 461
- US-A- 4 766 741
- US-A- 4 766 741

## Beschreibung

Die Erfindung betrifft ein Verfahren zum Kühlen eines Verbrauchers mit einem Kühlmedium, bei dem ein kryogenes Kühlmedium, das in einem Kryostat in einer Flüssigphase und in einer Gasphase vorliegt, mit einem Verbraucher in thermischen Kontakt gebracht wird, wobei mittels einer Vakuumpumpe kontinuierlich Kühlmedium aus der Gasphase abgezogen wird, das abgezogene gasförmige Kühlmedium aus dem Kryostat einem Verflüssiger zugeführt und rückverflüssigt wird, das rückverflüssigte Kühlmedium an einem Drosselorgan auf einen im Kryostat herrschenden Druck entspannt und erneut dem Kryostat zugeführt wird, wobei zumindest ein Teilstrom des aus der Gasphase im Kryostat abgezogenen Kühlmediums stromauf zur Vakuumpumpe mit dem Kühlmedium im Verflüssiger in thermischen Kontakt gebracht wird. Die Erfindung betrifft des Weiteren eine entsprechende Vorrichtung.

Die Verflüssigung von Gasen, insbesondere von Luft oder Luftgasen wie Stickstoff, Sauerstoff oder Argon, aber auch von Gasen wie Erdgas, Helium oder Wasserstoff ist Stand der Technik. Gase oder Gasgemische, deren Siedepunkt bei Normaldruck (1 bar) unterhalb von etwa -100°C (173 K) liegt, werden nachfolgend als "kryogene" Medien bezeichnet. In vielen Fällen ist es dabei sinnvoll, das Gas nicht nur bis zu seinem Siedepunkt, sondern auf eine Temperatur von beispielsweise einigen Kelvin unterhalb seines Siedepunktes abzukühlen ("Unterkühlung"). So vermeidet oder reduziert man beispielsweise die Entstehung von "Boil-off"-Gas und damit einhergehende Abdampfverluste in den Lagerbehältern oder von Kavitationen in den eingesetzten Pumpen.

In Kühlsystemen wird durch Unterkühlung des Kühlmediums verhindert, dass bereits durch einen geringen unvorhergesehenen Wärmeeintrag erhebliche Mengen an Kühlmedium verdampfen, wodurch der Kühlvorgang beeinträchtigt und im Extremfall die Apparatur beschädigt werden kann. Insbesondere bei der Kühlung supraleitender Elemente, wie beispielsweise supraleitende Kabel oder Magnetspulen, gewährleistet eine Unterkühlung des Kühlmediums eine zuverlässige Einhaltung der geforderten Kühltemperatur und somit die Funktionsfähigkeit des Elements. Um ein Kühlmedium zu unterkühlen wird beispielsweise ein Kühlbad aus dem gleichen Kühlmedium bereitgestellt und der Druck in einer über dem Kühlbad vorliegenden Gasphase mittels einer Vakuumpumpe reduziert. Aufgrund der damit einhergehenden Temperaturerniedrigung kann das Kühlbad anschließend zur Unterkühlung von Kühlmedium eingesetzt werden, das bei höherem Druck vorliegt. Das mittels der Vakuumpumpe abgezogene gasförmige Kühlmedium kann anschließend rückverflüssigt und erneut dem Kühlbad zugeführt werden.

Aus der DE 10 2012 016 292 A1 ist eine Anordnung zum Kühlen eines supraleitenden Kabels bekannt, bei dem das Kabel mittels Flüssigstickstoff gekühlt wird, der in zwei jeweils an den Enden des Kabels angeordneten Tanks bevorratet wird. Im Betrieb der Anordnung wird das Kühlmedium einem Tank entnommen, in der zuvor beschriebenen Weise unterkühlt und in einer das Kabel konzentrisch umhüllenden Leitung zum anderen Tank geführt. Nach einer gewissen Zeit wird die Strömungsrichtung umgekehrt, wodurch eine beständige Kühlung des Kabels durch das pendelnd geführte Kühlmedium erreicht wird.

In der EP 3 017 238 A1 wird ein Verfahren zum Kühlen eines Verbrauchers in einem Kühlkreislauf beschrieben, bei dem ein in einem Tank bevorratetes kryogenes Kühlmedium, beispielsweise Flüssigstickstoff, für seinen Einsatz im Kühlkreislauf unterkühlt wird. Der Tank dient zugleich als Ausgleichsbehälter, um etwaige, im Kühlkreislauf auftretende Druckschwankungen auszugleichen. Auch diese Anordnung eignet sich insbesondere zur Kühlung supraleitender Kabel oder anderer supraleitender Elemente.

Nachteilig bei Kühlsystemen, in denen das Kühlmedium in Tanks bevorratet wird, ist die Notwendigkeit, die Tanks regelmäßig zu befüllen, was insbesondere bei hohen Verbräuchen mit einem erheblichen logistischen Aufwand und entsprechenden Kosten verbunden ist. Als Alternative kommen Systeme in Betracht, in denen die geforderten tiefen Temperaturen mit geeigneten Systemen direkt vor Ort erzeugt werden.

Beispielsweise sind aus der DE 10 20134 001 216 A1, der US 6 438 994 B1, der WO 2008/133 965 A1 oder der WO 2019/073 129 A1 Kühlverfahren bekannt, die zur Kühlung eines Verbrauchers mit einem Brayton-Kühlkreislauf arbeiten. Bei einem Brayton-Kühlkreislauf wird das in ihm zirkulierende Kühlmedium in einem Verdichter, vorzugsweise einem Turboverdichter, komprimiert, wobei der Verdichterdruck im Regelfall zwischen 3 und 20 bar beträgt. Anschließend wird das verdichtete Kühlmedium gegen ein externes Kühlmittel, bei dem es sich üblicherweise um Wasser handelt, sowie gegen sich selbst weiter abgekühlt. Das derart vorgekühlte Kühlmedium wird in einer Turbine unter Abkühlung auf die gewünschte Kühltemperatur entspannt und zur Kühlung eines Verbrauchers eingesetzt. Anschließend wird das Kühlmedium, nach dem vorbeschriebenen Wärmetausch gegen sich selbst, erneut dem Verdichter zugeführt. Brayton-Kühlsysteme haben sich bewährt, sind jedoch verhältnismäßig aufwändig im Aufbau und kostenintensiv im Betrieb.

Aus der DE 696 29 461 T2, der DE 199 22 364 A1 und der US 4 766 741 A sind Verfahren bzw. Vorrichtungen zum Kühlen eine Verbrauchers mit einem Kühlmedium in einem Kryostaten bekannt, bei denen zumindest ein Teilstrom des aus einer Gasphase im Kryostat mittels einer Vakuumpumpe abgezogenen Kühlmediums stromauf zur Vakuumpumpe mit dem Kühlmedium im Verflüssiger in thermischen Kontakt gebracht wird. Das Dokument DE 696 29 461 T2 offenbart ein Verfahren gemäß dem Oberbegriff von Anspruch 1 und eine Vorrichtung gemäß dem Oberbegriff von Anspruch 6. Auch diese Gegenstände sind hinsichtlich ihrer Effizienz noch verbesserungsfähig.

Aufgabe der vorliegenden Erfindung ist es, eine alternative und im Betrieb kostengünstige Möglichkeit zum Kühlen eines Verbrauchers unter Einsatz eines kryogenen Kühlmediums bereitzustellen.

Gelöst ist diese Aufgabe durch eine Verfahren mit den Merkmalen des Patentanspruchs 1 und durch eine Vorrichtung gemäß des Anspruchs 6. Vorteilhafte Ausgestaltungen der Erfindung sind in den Unteransprüchen angegeben.

Im Kryostat liegt das Kühlmedium bei einem gegenüber Normaldruck (1 bar) stark erniedrigten Druck von beispielsweise zwischen 10 mbar und 500 mbar, bei Einsatz von Stickstoff als Kühlmedium bevorzugt zwischen 150 mbar und 500 mbar, vor der mittels der Vakuumpumpe beständig aufrecht erhalten wird. Dadurch liegt das Kühlmedium im Kryostat bei einer Temperatur vor, die erheblich niedriger als die Siedetemperatur bei Normaldruck ist. Das aus dem Kryostat abgezogene gasförmige Kühlmedium wird in der Vakuumpumpe verdichtet und weist anschließend einen Druck von beispielsweise zwischen 1 bar und 1,5 bar auf. Nach seiner Rückverflüssigung verlässt das Kühlmedium den Verflüssiger mit einem Druck, der beispielsweise dem Normaldruck entspricht und einer der Siedetemperatur bei diesem Druck entsprechenden Temperatur, bevor es am Drosselorgan entspannt und die im Kryostat herrschenden Druck- und Temperaturbedingungen annimmt.

Um die tiefe Temperatur der aus dem Kryostat abgezogenen Gasphase zu nutzen und das Kühlmedium vor Eintritt in die Vakuumpumpe anzuwärmen, wird zumindest ein Teilstrom des mittels der Vakuumpumpe aus der Gasphase abgesaugten gasfömigen Kühlmediums über einen Wärmetauscher geführt, der mit Kühlmedium im Verflüssiger thermisch verbunden ist. Dieser Wärmetauscher ist bevorzugt im Verflüssiger selbst angeordnet, beispielsweise in Gestalt einer zusätzlichen Wärmetauscherfläche in einem im Verflüssiger vorhandenen Gegenstrom-Wärmetauscher. Dabei nimmt das Kühlmedium Wärme aus dem Kühlmedium im Verflüssiger auf und wird selbst auf eine mit dem Betrieb einer üblichen, nicht für besondere Kälteanwendungen ausgelegten Vakuumpumpe verträgliche Temperatur von beispielsweise 250 K erwärmt. Um an der Vakuumpumpe eine gewünschte Temperatur saugseitig einstellen zu können, kann beispielsweise das aus dem Kryostat abgezogene gasförmige Kühlmedium in zwei Teilströme zerlegt werden, von denen ein erster Teilstrom über den Wärmetauscher im Verflüssiger und von dort zur Vakuumpumpe geführt wird, während der andere Teilstrom direkt zur Vakuumpumpe geleitet und vor Erreichen der Vakuumpumpe mit dem anderen zusammengeführt wird.

Bevorzugt durchläuft das Kühlmedium zwischen Vakuumpumpe und Verflüssiger eine Kühlstufe, um die von der Vakuumpumpe in das Kühlmedium eingetragene Wärme zumindest teilweise an ein externes Kühlmittel, beispielsweise Luft, Wasser oder ein organisches Kühlmittel abzugeben. Eine solche Kühlstufe kann jedoch auch in den Verflüssiger integriert sein.

Eine besonders vorteilhafte Ausgestaltung der Erfindung sieht vor, dass das der Vakuumpumpe zugeführte Kühlmedium mit von der Vakuumpumpe abgeführtem Kühlmedium in thermischen Kontakt gebracht wird. Dadurch kann die durch die Vakuumpumpe in das Kühlmedium eingetragene Wärme zumindest teilweise zur Vorwärmung des Kühlmediums saugseitig zur Vakuumpumpe eingesetzt werden. Dazu kann beispielsweise zumindest ein Teilstrom des druckseitigen Kühlmediums durch einen saugseitig an der Vakuumpumpe angeordneten Wärmetauscher geführt werden. Im Falle, dass stromab zur Vakuumpumpe eine mit einem Kühlmittel betriebene Kühlstufe vorhanden ist, kann dabei auch jedoch das dort eingesetzte Kühlmittel zum Transport von Wärme an das der Vakuumpumpe zuzuführende Kühlmedium eingesetzt werden.

Beim "Verbraucher" handelt es sich allgemein um einen Gegenstand, der direkt oder indirekt abzuführende Wärme in das System einträgt und/oder der gegen das Eintragen von Wärme aus seiner Umgebung abgeschirmt werden muss. Beispielsweise handelt es sich um ein supraleitendes Element, wie beispielsweise ein supraleitendes Kabel, eine supraleitende Magnetspule oder ein supraleitendes elektronisches Bauelement. Insbesondere kann der Verbraucher auch einen Kühlkreislauf umfassen, der seinerseits zur Kühlung eines Endverbrauchers, beispielsweise ein supraleitendes Element, dient und in dem das durch ihn zirkulierende Kühlmedium mittels eines im Kryostat angeordneten Wärmetauschers im unterkühlten Zustand gehalten wird. Dies wird beispielsweise dadurch erreicht, dass im Kühlkreislauf des Verbrauchers das gleiche Kühlmedium, jedoch bei einem gegenüber dem Druck des Kühlmediums im Kryostaten höheren Druck eingesetzt wird, beispielsweise flüssiger Stickstoff bei einem Druck zwischen 1 bar und 20 bar.

Erfindungsgemäß handelt es sich beim Verflüssiger um einen nach dem Linde-Prinzip arbeitenden Verflüssiger, bei dem in an sich bekannter Weise das mittels der Vakuumpumpe aus dem Kryostat abgesaugte gasförmige Kühlmedium in einem Kompressor verdichtet, anschließend in einem Wärmetauscher mit einem externen Kühlmittel gekühlt, an einem Entspannungsorgan, bei der es sich beispielsweise um eine Entspannungsdüse, ein Entspannungsventil oder eine Turbine handelt, entspannt und einem Abscheider zur Trennung einer Gasphase von einer Flüssigphase zugeführt wird. Das Kühlmedium aus der Gasphase wird anschließend in einem Gegenstrom-Wärmetauscher mit dem verdichteten Kühlmedium stromab zum Kompressor und stromauf zum Entspannungsorgan in thermischen Kontakt gebracht, während das Kühlmedium aus der Flüssigphase den Verflüssiger verlässt und dem Drosselorgan und von dort weiter dem Kryostat zugeführt wird. Erfindungsgemäß können jedoch auch nach einem anderen Prinzip arbeitende Kryogeneratoren als Verflüssiger im erfindungsgemäßen Verfahren zum Einsatz kommen, wie beispielsweise Stirling-Kältemaschinen.

Als Kühlmedium kommt erfindungsgemäß ein bei Normaldruck (1 bar) gasförmiges Medium verstanden werden. Insbesondere handelt es sich dabei um Stickstoff, ein Edelgas, wie insbesondere Argon, Neon oder Helium, Wasserstoff, Flüssigerdgas (LNG) oder Luft.

Eine bevorzugte Verwendung des erfindungsgemäßen Verfahrend besteht in der Kühlung von supraleitenden Elementen, insbesondere Elementen aus oder mit Bauteilen aus konventionellen Supraleitern oder Hochtemperatursupraleitern, wie beispielsweise Stromverteilungskabel, Stromkabel, Stromschienen, Strombegrenzer, Transformatoren, Magnete, elektronische Bauelemente oder sonstige Apparate oder Bauteile, deren Funktionsfähigkeit von der Kühlung supraleitender Teile in der Apparatur oder dem Bauteil abhängt. Die Kühlung der supraleitenden Elemente erfolgt dabei direkt im Kryostat oder unter Vermittlung eines Kühlkreislaufs, in dem ein unterkühltes Kühlmedium zwischen Kryostat und dem zu kühlenden Element zirkuliert.

Die Aufgabe der Erfindung wird auch mit einer Vorrichtung mit den Merkmalen des Patenanspruchs 6 gelöst.

Eine Vorrichtung zum Kühlen eines Verbrauchers mit einem unterkühlten Kühlmedium ist mit einem Kryostat, in dem ein kryogenes Kühlmedium in einer über einen Wärmetauscher mit einem zu kühlenden Verbraucher in thermischen Kontakt stehenden Flüssigphase und in einer Gasphase vorliegt, und mit einer über einen Leitungsabschnitt mit der Gasphase im Kryostat strömungsverbundenen Vakuumpumpe ausgerüstet, wobei die Vakuumpumpe abströmseitig über einen Leitungsabschnitt mit einem Verflüssiger, und der Verflüssiger abströmseitig über einen mit einem Drosselorgan ausgerüsteten Leitungsabschnitt mit dem Kryostat strömungsverbunden ist. Erfindungsgemäß ist dabei eine vom Kryostat zur Vakuumpumpe führende Leitung vorgesehen, in der ein Wärmetauscher mit einer Wärmetauscherfläche angeordnet ist, an welcher das durch diese Leitung geführte gasförmige Kühlmedium mit dem Kühlmedium im Verflüssiger thermisch verbindbar ist.

Die zwischen Vakuumpumpe und Verflüssiger, Verflüssiger und Kryostat, sowie zwischen Kryostat und Vakuumpumpe vorgesehenen Leitungsabschnitte sind also Teil eines Kühlkreislaufs, durch den ein Kühlmedium geführt und dabei im Kryostat gegenüber der Siedetemperatur bei Normaldruck unterkühlt, verdampft und anschließend im Verflüssiger rückverflüssigt wird. Dabei nimmt es im Kryostat Wärme vom Verbraucher auf, die es im Verflüssiger und/oder einer separaten Kühleinrichtung an ein externen Kühlmittel, wie beispielsweise Luft oder Wasser, abgibt.

Um die Wirtschaftlichkeit zu erhöhen, wird zumindest ein Teilstrom des aus dem Kryostat abgezogenen gasförmigen Kühlmediums dazu genutzt, das durch den Verflüssiger geführte Kühlmedium zu kühlen. Dazu wird wenigstens ein Teilstrom das Kühlmediums über eine Leitung einem Wärmtauscher zugeführt, der eine thermische Verbindung mit dem durch den Verflüssiger geführten Kühlmedium herstellt und der dazu bevorzugt im Verflüssiger selbst angeordnet ist. Bei dieser Leitung handelt es sich beispielsweise um eine Zweigleitung, die von dem zwischen Kryostat und Vakuumpumpe verlaufenden Leitungsabschnitt abführt und stromab zum Wärmetauscher wieder in diese einmündet; bei einer solchen Anordnung kann - unter Einsatz geeigneter Ventile sowie einer Steuerung - ein vorgegebener Teilstrom des aus dem Kryostat abgezogenen gasförmigen Kühlmediums über den Wärmetauscher geleitet werden, während der übrige Teilstrom direkt der Vakuumpumpe zugeführt wird.

Bevorzugt befindet sich in dem von der Vakuumpumpe zum Verflüssiger verlaufenden Leitungsabschnitt eine Kühleinrichtung, mittels der die von der Vakuumpumpe in das Kühlmedium eingetragene Wärme zumindest teilweise abgeführt wird. Beispielsweise handelt es sich dabei um einen in dem Leitungsabschnitt angeordneten Wärmetauscher, in dem das gasförmige Kühlmedium mit einem externen Kühlmittel, wie Wasser, Luft oder ein organisches Kühlmittel, in thermischen Kontakt gebracht wird.

Da das aus dem Kryostat abgezogene Kühlmedium auf einer sehr niedrigen Temperatur vorliegt, die beim Betrieb üblicher Vakuumpumpen zu erheblichen Problemen führen könnten, empfiehlt es sich, das Kühlmedium vor seinem Eintritt in die Vakuumpumpe auf eine Temperatur von beispielsweise 250 K oder darüber anzuwärmen. Dies erfolgt zum einen mittels des oben beschriebenen thermischen Kontakts mit dem Kühlmedium im Verflüssiger. Ergänzend dazu kann stromauf zur Vakuumpumpe ein Wärmetauscher vorgesehen sein, in welchem das die Vakuumpumpe anströmende Kühlmedium mit von der Vakuumpumpe abströmendem und durch den Wärmeeintrag der Vakuumpumpe erwärmtem Kühlmedium direkt oder indirekt in thermischen Kontakt gebracht wird. Im Falle, dass abströmseitig an der Vakuumpumpe eine Kühleinrichtung zum Abführen der von der Vakuumpumpe in das Kühlmedium eingetragenen Wärme vorgesehen ist, kann dies in einer zweckmäßigen, indirekten Weise erfolgen, indem zumindest ein Teilstrom des dort eingesetzten Kältemittels einem stromauf zur Vakuumpumpe angeordneten Wärmetauscher zugeführt wird, um das Kühlmedium dort zu beheizen.

In der erfindungsgemäßen Vorrichtung handelt es sich beim Verflüssiger um eine nach dem Linde-Verfahren arbeitenden Einrichtung. Dabei weist der Verflüssiger einen Kompressor zum Verdichten des von der Vakuumpumpe zugeführten Kühlmediums, einen mit einem externen Kühlmittel gespeister Wärmetauscher zum zumindest teilweisen Abführen der vom Kompressor in das Kühlmedium eingetragenen Kompressionswärme, ein Entspannungsorgan, bei dem es sich beispielsweise um eine Entspannungsdüse, ein Entspannungsventil oder eine Turbine handelt, zur Entspannung des verdichteten Mediums, einen Abscheider zum Trennen einer Gasphase von einer Flüssigphase des entspannten Kühlmediums und eine mit einem Gegenstrom-Wärmetauscher zum thermischen Kontaktieren mit dem verdichteten Medium aus dem Kompressor ausgerüsteten Rückleitung zum Rückführen von Kühlmedium aus der Gasphase des Abscheiders zur Anströmseite des Kompressors sowie eine Leitung zum Fördern des in der Flüssigphase des Abscheiders bevorzugt unter Normaldruck vorliegenden rückverflüssigte Kühlmedium an das Drosselorgan auf.

Insbesondere für den Fall, dass eine preisgünstige Variante mit einem wenig leistungsstarken Verflüssiger gewählt wird, sieht eine vorteilhafte Ausgestaltung der Erfindung vor, dass im Verflüssiger eine Wärmetauscherfläche vorgesehen ist, an der das den Verflüssiger durchlaufende Kühlmedium mit einem externen, über eine Zuleitung aus einer Quelle herangeführten kryogenen Kälteträger in thermischen Kontakt bringbar ist. Ein Teil der bei der Verflüssigung erforderlichen Wärmeübertragung erfolgt in diesem Fall auf den externen kryogenen Kälteträger. Beim externen kryogenen Kälteträger handelt es sich insbesondere um Flüssigstickstoff oder ein anderes kryogenes Medium. Bei der Wärmetauscherfläche handelt es sich beispielsweise um eine zusätzliche Wärmetauscherfläche, die in einem im Verflüssiger ohnehin vorhandenen Wärmetauscher eingerichtet wird, beispielsweise in einem Gegenstrom-Wärmetauscher.

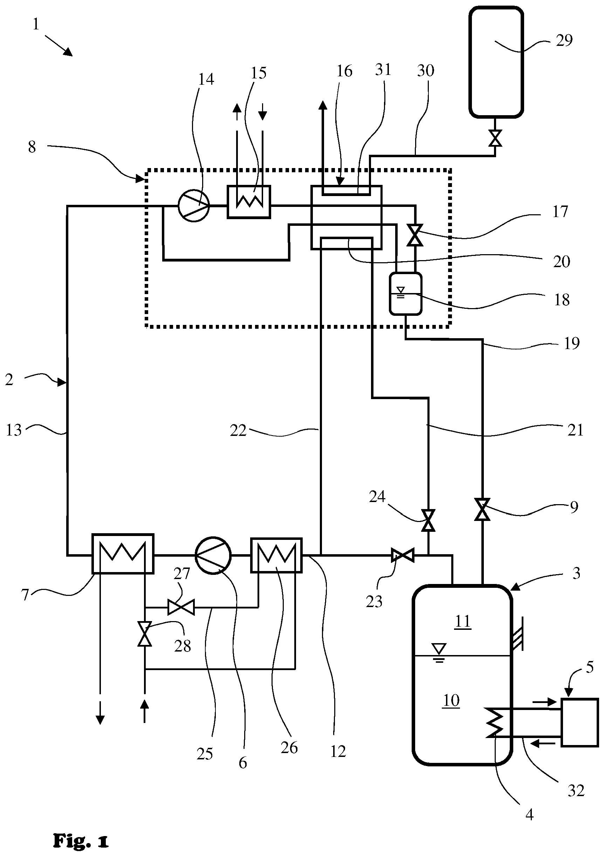

Anhand der Zeichnung soll ein Ausführungsbeispiel der Erfindung näher erläutert werden. Die einzige Zeichnung (Fig. 1) zeigt schematisch eine erfindungsgemäße Vorrichtung.

Die in Fig. 1 gezeigte Vorrichtung 1 umfasst einen Kühlkreislauf 2 für ein Kühlmedium, in dem - in Strömungsrichtung des Kühlmediums gesehen nacheinander - ein Kryostat 3, in dem ein Wärmetauscher 4 eine thermische Verbindung zu einem Verbraucher 5 herstellt, eine Vakuumpumpe 6, ein Kühler 7, ein - hier durch eine punktierte Linie nur angedeuteter - Verflüssiger 8 und ein Drosselorgan 9 angeordnet sind. Als Kühlmedium kommt im Kühlkreislauf 2 ein unter Normalbedingungen als Gas vorliegendes Medium zum Einsatz, beispielsweise Stickstoff.

In dem als druckfesten, thermisch gut isolierten Behälter ausgebildeten Kryostat 3 liegt das Kühlmedium in einer Flüssigphase 10 und einer Gasphase 11 vor. Über einen Leitungsabschnitt 12 des Kühlkreislaufs ist die Gasphase 11 mit der Vakuumpumpe 6 strömungsverbunden. Durch die Vakuumpumpe 6 wird der Druck im Kryostat 3 auf einen Wert von beispielsweise 150 mbar reduziert, sodass das Kühlmedium in der Flüssigphase 10 auf einer gegenüber der Siedetemperatur bei Normaldruck reduzierten Temperatur vorliegt, im Falle von Stickstoff als Kühlmedium beispielsweise auf einen Wert von 64 K. Mit dieser Temperatur kühlt das flüssige Kühlmedium den Verbraucher 5 am Wärmetauscher 4.

Stromab zur Vakuumpumpe 6 durchläuft das gasförmige Kühlmedium einen Leitungsabschnitt 13, in dem auch der Kühler 7 angeordnet ist. Im Kühler 7 wird das Kühlmedium mit einem externen Kühlmittel, beispielsweise Kühlwasser, in thermischen Kontakt gebracht, um insbesondere die von der Vakuumpumpe 6 eingetragene Wärme abzuführen. Vom Kühler 7 führt der Leitungsabschnitt 13 weiter zum Verflüssiger 8.

Im Verflüssiger 8 wird das gasförmige Kühlmedium durch Absenkung seiner Temperatur zurück in den flüssigen Zustand gebracht. Beim Verflüssiger 8 handelt es sich um einen an sich bekannte Vorrichtung, bei der das Kühlmedium unter Ausnutzung des Joule-Thomson-Effekts auf seine Siedetemperatur bei Normaldruck gekühlt und dabei verflüssigt wird. Im dem in Fig. 1 gezeigten Beispiel durchläuft das zunächst noch gasförmige Kühlmedium in mehreren Zyklen einen Kompressor 14, einen Wärmetauscher 15, in dem die vom Kompressor 14 in das Kühlmedium eingetragene Wärme durch Wärmetausch mit einem externen Kühlmittel, beispielsweise Wasser, abgeführt wird, einen Gegenstrom-Wärmetauscher 16 und ein Entspannungsorgan 17 zur Druckreduzierung auf etwa Normaldruck. Beim Entspannungsorgan 17 handelt es sich beispielsweise um ein Entspannungsventil und/oder eine Entspannungsturbine. Vom Entspannungsorgan 17 gelangt das bereits teilweise verflüssigte Kühlmedium in einen Abscheider 18 zum Trennen von flüssiger und gasförmiger Phase. Aus der Gasphase im Abscheider 18 wird gasförmiges Kühlmedium durch den Gegenstrom-Wärmetauscher 16 in den Leitungsabschnitt 13 saugseitig zum Kompressor 14 zurückgeführt, während das im Abscheider 18 tiefkalt verflüssigt vorliegende Kühlmedium mit einer Temperatur von beispielsweise 77 K über einen Leitungsabschnitt 19 den Verflüssiger 8 verlässt.

Über den Leitungsabschnitt 19 wird das verflüssigte Kühlmedium dem Drosselorgan 9 zugeführt, dort auf den im Kryostat 3 herrschenden Druck entspannt und anschließend dem Kryostat 3 zugeführt; der Druck im Kryostat 3 wird dabei von der Vakuumpumpe 6 bestimmt.

Das in der Gasphase 11 des Kryostaten 3 befindliche Kühlmedium besitzt eine vergleichsweise niedrige Temperatur von beispielsweise etwa 64 K. Diese Kälte wird erfindungsgemäß dazu genutzt, die Effizienz des Verfahrens zu steigern. Dazu wird zumindest ein Teilstrom des Kühlmediums aus der Gasphase 11 vom Leitungsabschnitt 12 abgezweigt und über eine Leitung 21 einer im Gegenstrom-Wärmetauscher 16 des Verflüssigers 8 vorgesehenen Wärmetauscherfläche 20 zugeführt und anschließend über eine Leitung 22 in den Leitungsabschnitt 12, stromauf zur Vakuumpumpe 6, zurückgeführt. An der Wärmetauscherfläche 20 nimmt es dabei einen Teil der Wärme des über Leitungsabschnitt 13 zugeführten und im Kompressor 14 erwärmten Kühlmediums auf und kühlt dieses zugleich ab. Die Mengenströme des über die Leitungen 21, 22 geführten bzw. direkt über den Leitungsabschnitt 12 der Vakuumpumpe 6 zugeführten Kühlmediums können mittels einer hier nicht gezeigten Steuerung an Ventilen 23, 24 eingestellt werden.

Alternativ oder ergänzend dazu kann das der Vakuumpumpe 6 zugeführte Kühlmedium dadurch erwärmt werden, dass zumindest ein Teilstrom des im Kühler 7 eingesetzten Kühlmittels zunächst stromab zum Kühler 7 über eine Zweigleitung 25 einem stromauf zur Vakuumpumpe 6 im Leitungsabschnitt 12 angeordneten Wärmetauscher 26 zugeführt wird. Auf diese Weise wird das von der Vakuumpumpe 6 abströmende Kühlmedium indirekt vom dem der Vakuumpumpe 6 zuzuführenden Kühlmedium gekühlt. Auch hier können die Mengenströme des über die Zweigleitung 25 bzw. an dieser vorbei geführten Kühlmittels mittels einer hier nicht gezeigte Steuerung an Ventilen 27, 28 geregelt werden. Im Übrigen kann auf die Zuführung eines externen Kühlmittels an dieser Stelle auch völlig verzichtet und das von der Vakuumpumpe 6 abströmende Kühlmedium ganz oder in einem Teilstrom durch den Wärmetauscher 26 geführt werden, um das der Vakuumpumpe 6 zuzuführende Kühlmedium aufzuwärmen.

Der Verflüssiger 8 kann im Übrigen optional auch so ausgelegt sein, dass die Leistung des Kompressors 14 weder alleine noch mit der Unterstützung durch das Kühlmedium an der Wärmetauscherfläche 20 ausreicht, um das gasförmige Kühlmedium im Verflüssiger 8 zu verflüssigen. In diesem Fall kann eine zusätzliche Kühlung durch einen externen kryogenen Kälteträger, beispielsweise flüssiger Stickstoff, die zur endgültigen Verflüssigung des Kühlmediums erforderliche Kälte liefern. Dazu wird in der Vorrichtung 1 der Kälteträger in einem Tank 29 bevorratet und bei Bedarf über eine Zuleitung 30 einer Wärmetauscherfläche 31 des Gegenstrom-Wärmetauschers 16 im Verflüssiger 8 zugeführt. Der Kälteträger wird nach Durchlaufen des Gegenstrom-Wärmetauschers 16 in die Umgebungsatmosphäre abgelassen oder einer anderweitigen Verwendung zugeführt.

Die Erfindung ist insbesondere zur Kühlung supraleitender, insbesondere hochtemperatursupraleitender Elemente geeignet, wie beispielsweise supraleitende Kabel, Stromzuführungen, elektronische Bauelemente oder Magnetspulen. Insbesondere für diesen Fall umfasst der Verbraucher 5 einen Kühlkreislauf 32, in den auch der Wärmetauscher 4 integriert ist. Im Kühlkreislauf 32 zirkuliert ein Kühlmedium, beispielsweise flüssiger Stickstoff, bei einem gegenüber dem Druck im Kryostaten höheren Druck, beispielsweise bei 1 bis 20 bar, und wird durch den Wärmekontakt mit dem bei einer tieferen Temperatur vorliegenden Flüssigbad 10 am Wärmetauscher 4 unterkühlt.

### Bezugszeichenliste

- 1: Vorrichtung
- 2: Kühlkreislauf
- 3: Kryostat
- 4: Wärmetauscher
- 5: Verbraucher
- 6: Vakuumpumpe
- 7: Kühler
- 8: Verflüssiger
- 9: Drosselorgan
- 10: Flüssigphase
- 11: Gasphase
- 12: Leitungsabschnitt
- 13: Leitungsabschnitt
- 14: Kompressor
- 15: Wärmetauscher
- 16: Gegenstrom-Wärmetauscher
- 17: Entspannungsorgan
- 18: Abscheider
- 19: Leitungsabschnitt
- 20: Wärmetauscherfläche
- 21: Leitung
- 22: Leitung
- 23: Ventil
- 24: Ventil
- 25: Zweigleitung
- 26: Wärmetauscher
- 27: Ventil
- 28: Ventil
- 29: Tank
- 30: Zuleitung
- 31: Wärmetauscherfläche
- 32: Kühlkreislauf

## Patentansprüche

1. Verfahren zum Kühlen eines Verbrauchers mit einem Kühlmedium, bei dem ein Kühlmedium, das in einem Kryostat (3) in einer Flüssigphase (10) und in einer Gasphase (11) vorliegt, mit einem Verbraucher (5) in thermischen Kontakt gebracht wird, wobei mittels einer Vakuumpumpe (6) kontinuierlich Kühlmedium aus der Gasphase (11) abgezogen wird, das abgezogene gasförmige Kühlmedium aus dem Kryostat (3) einem Verflüssiger (8) zugeführt und rückverflüssigt wird, das rückverflüssigte Kühlmedium an einem Drosselorgan (9) auf einen im Kryostat (3) herrschenden Druck entspannt und erneut dem Kryostat (3) zugeführt wird,
wobei zumindest ein Teilstrom des aus der Gasphase (11) im Kryostat (3) abgezogenen Kühlmediums stromauf zur Vakuumpumpe (6) mit dem Kühlmedium im Verflüssiger (8) in thermischen Kontakt gebracht wird, **dadurch gekennzeichnet,**
**dass** das mittels der Vakuumpumpe (6) aus dem Kryostat (3) abgezogene gasförmige Kühlmedium im Verflüssiger (8) in einem Kompressor (14) verdichtet wird, anschließend in einem Wärmetauscher (15) mit einem externen Kühlmittel gekühlt, an einem Entspannungsorgan (17) entspannt und einem Abscheider (18) zur Trennung einer Gasphase von einer Flüssigphase zugeführt wird, wobei das Kühlmedium aus der Gasphase des Abscheiders (18) in einem Gegenstrom-Wärmetauscher (16) mit dem verdichteten Kühlmedium stromab zum Kompressor (14) und stromauf zum Entspannungsorgan (17) in thermischen Kontakt gebracht und das Kühlmedium aus der Flüssigphase des Abscheiders (18) dem Drosselorgan (9) zugeführt wird.

2. Verfahren nach Anspruch 1, **dadurch gekennzeichnet, dass** das gasförmige Kühlmedium zwischen Vakuumpumpe (6) und Verflüssiger (8) eine Kühlstufe durchläuft.

3. Verfahren nach Anspruch 1 oder 2, **dadurch gekennzeichnet, dass** das gasförmige Kühlmedium stromab zum Kryostat (3) mit gasförmigem Kühlmedium aus dem Kryostat (3) stromauf zur Vakuumpumpe (6) in thermischen Kontakt gebracht wird.

4. Verfahren nach einem der vorhergehenden Ansprüche, **dadurch gekennzeichnet, dass** als Kühlmedium ein bei Normaldruck gasförmiges Medium zum Einsatz kommt, bevorzugt Stickstoff, ein Edelgas, Argon, Neon, Helium, Wasserstoff, Flüssigerdgas (LNG) oder Luft.

5. Verfahren nach einem der vorhergehenden Ansprüche, **gekennzeichnet durch** die Verwendung zur Kühlung von supraleitenden Elementen.

6. Vorrichtung zum Kühlen eines Verbrauchers mit einem Kühlmedium, mit einem Kryostat (3), in dem ein kryogenes Kühlmedium in einer über einen Wärmetauscher (4) in thermischen Kontakt mit einem Verbraucher (5) stehenden Flüssigphase (10) und einer Gasphase (11) vorliegt, und mit einer über einen Leitungsabschnitt (12) mit der Gasphase (11) im Kryostat (3) strömungsverbundenen Vakuumpumpe (6), die abströmseitig über einen Leitungsabschnitt (13) mit einem Verflüssiger (8), und der Verflüssiger (8) abströmseitig über einen mit einem Drosselorgan (9) ausgerüsteten Leitungsabschnitt (19) mit dem Kryostat (3) strömungsverbunden ist,
wobei in einer vom Kryostat (3) zur Vakuumpumpe (6) führenden Leitung (21, 22) ein Wärmetauscher mit einer Wärmetauscherfläche (20) vorgesehen ist, an der das durch diese Leitung geführte gasförmige Kühlmedium mit dem Kühlmedium im Verflüssiger (8) thermisch verbindbar ist,
**dadurch gekennzeichnet,**
**dass** der Verflüssiger (8) einen Kompressor (14) zum Verdichten des aus der Vakuumpumpe (6) zugeführten Kühlmediums, einen mit einem externen Kühlmittel gespeisten Wärmetauscher (15) zum zumindest teilweisen Abführen der vom Kompressor (14) in das Kühlmedium eingetragenen Kompressionswärme, ein Entspannungsorgan (17) zur Entspannung des verdichteten Kühlmediums, einen Abscheider (18) zum Trennen einer Flüssigphase von einer Gasphase des entspannten Kühlmediums und eine mit einem Gegenstrom-Wärmetauscher (16) zum thermischen Kontaktieren mit dem verdichteten Medium aus dem Kompressor (14) ausgerüstete Rückleitung zum Rückführen von Kühlmedium aus der Gasphase des Abscheiders (18) zur Anströmseite des Kompressors und eine Leitung (19) zum Fördern des rückverflüssigten Kühlmediums aus der Flüssigphase des Abscheiders (18) zum Drosselorgan (9) aufweist.

7. Vorrichtung nach Anspruch 6, **dadurch gekennzeichnet, dass** in dem von der Vakuumpumpe (6) zum Verflüssiger (8) verlaufenden Leitungsabschnitt (13) eine Kühleinrichtung (7) vorgesehen ist.

8. Vorrichtung nach Anspruch 6 oder 7, **dadurch gekennzeichnet, dass** stromauf zur Vakuumpumpe (6) ein Wärmetauscher (26) vorgesehen ist, in dem gasförmiges Kühlmedium aus dem Leitungsabschnitt (13) zwischen Vakuumpumpe (6) und Verflüssiger (8) mit gasförmigem Kühlmedium aus dem Kryostat (3) in thermischen Kontakt bringbar ist.

9. Vorrichtung nach einem der Ansprüche 6 bis 8, **dadurch gekennzeichnet, dass** im Verflüssiger (8) eine Wärmetauscherfläche (31) vorgesehen ist, an der das den Verflüssiger (8) durchlaufende Kühlmedium mit einem externen, über eine Zuleitung (30) aus einer Quelle (29) herangeführten kryogenen Kälteträger in thermischen Kontakt bringbar ist.

## Claims

1. Method for cooling a consumer by way of a consumer medium, in which a cooling medium present in a cryostat (3) in a liquid phase (10) and in a gas phase (11) is brought into thermal contact with a consumer (5), wherein, by means of a vacuum pump (6), cooling medium is extracted continuously from the gas phase (11), the extracted gaseous cooling medium from the cryostat (3) is supplied to a condenser (8) and reliquefied, and the reliquefied cooling medium is expanded at a throttling member (9) to a pressure prevailing in the cryostat (3) and is supplied to the cryostat (3) again,
wherein, upstream of the vacuum pump (6), at least a partial stream of the cooling medium extracted from the gas phase (11) in the cryostat (3) is brought into thermal contact with the cooling medium in the condenser (8),
**characterized**
**in that** the gaseous cooling medium extracted from the cryostat (3) by means of the vacuum pump (6) is compressed in a compressor (14) in the condenser (8), and is subsequently cooled in a heat exchanger (15) by an external coolant, expanded at an expansion member (17) and supplied to a separator (18) for separating a gas phase from a liquid phase, wherein the cooling medium from the gas phase of the separator (18) is brought into thermal contact in a counterflow heat exchanger (16) with the compressed cooling medium downstream of the compressor (14) and upstream of the expansion member (17) and the cooling medium from the liquid phase of the separator (18) is supplied to the throttling member (9) .

2. Method according to Claim 1, **characterized in that**, between vacuum pump (6) and condenser (8), the gaseous cooling medium passes through a cooling stage.

3. Method according to Claim 1 or 2, **characterized in that**, downstream of the cryostat (3), the gaseous cooling medium is brought into thermal contact with gaseous cooling medium from the cryostat (3) upstream of the vacuum pump (6).

4. Method according to one of the preceding claims, **characterized in that**, as cooling medium, use is made of a medium which is gaseous at normal pressure, preferably nitrogen, a noble gas, argon, neon, helium, hydrogen, liquefied natural gas (LNG) or air.

5. Method according to one of the preceding claims, **characterized by** the use for cooling superconducting elements.

6. Apparatus for cooling a consumer by way of a cooling medium, having a cryostat (3), in which a cryogenic cooling medium is present in a gas phase (11) and in a liquid phase (10) which, via a heat exchanger (4), is in thermal contact with a consumer (5), and having a vacuum pump (6), which is connected in terms of flow to the gas phase (11) in the cryostat (3) via a line section (12) and, on the downstream side, is connected in terms of flow to a condenser (8) via a line section (13), the condenser (8) on the downstream side being connected in terms of flow to the cryostat (3) via a line section (19) equipped with a throttling member (9), wherein, in a line (21, 22) leading from the cryostat (3) to the vacuum pump (6), provision is made of a heat exchanger with a heat-exchanger surface (20), at which heat-exchanger surface the gaseous cooling medium conducted through said line is able to be connected thermally to the cooling medium in the condenser (8),
**characterized**
**in that** the condenser (8) has a compressor (14) for compressing the cooling medium supplied from the vacuum pump (6), has a heat exchanger (15) which is fed with an external coolant and which serves for at least partial removal of the compression heat introduced into the cooling medium by the compressor (14), has an expansion member (17) for expanding the compressed cooling medium, has a separator (18) for separating a liquid phase from a gas phase of the expanded cooling medium, and has a return line which is equipped with a counterflow heat exchanger (16) for thermal contacting with the compressed medium from the compressor (14) and which serves for returning cooling medium from the gas phase of the separator (18) to the inflow side of the compressor, and has a line (19) for conveying the reliquefied cooling medium from the liquid phase of the separator (18) to the throttling member (9).

7. Apparatus according to Claim 6, **characterized in that** provision is made of a cooling device (7) in the line section (13) running from the vacuum pump (6) to the condenser (8).

8. Apparatus according to Claim 6 or 7, **characterized in that**, upstream of the vacuum pump (6), provision is made of a heat exchanger (26) in which gaseous cooling medium from the line section (13), between vacuum pump (6) and condenser (8), is able to be brought into thermal contact with gaseous cooling medium from the cryostat (3).

9. Apparatus according to one of Claims 6 to 8, **characterized in that**, in the condenser (8), provision is made of a heat-exchanger surface (31) at which the cooling medium passing through the condenser (8) is able to be brought into thermal contact with an external cryogenic refrigerant delivered via a supply line (30) from a source (29) .

## Revendications

1. Procédé de refroidissement d'un consommateur avec un fluide de refroidissement, dans lequel un fluide de refroidissement, qui est présent dans un cryostat (3) dans une phase liquide (10) et dans une phase gazeuse (11), est mis en contact thermique avec un consommateur (5), du fluide de refroidissement étant soutiré en continu de la phase gazeuse (11) au moyen d'une pompe à vide (6), le fluide de refroidissement gazeux soutiré étant amené du cryostat (3) à un condenseur (8) et étant recondensé, le fluide de refroidissement recondensé étant détendu au niveau d'un organe d'étranglement (9) à une pression régnant dans le cryostat (3) et étant à nouveau amené au cryostat (3),
au moins un courant partiel du fluide de refroidissement soutiré de la phase gazeuse (11) dans le cryostat (3) étant mis en contact thermique avec le fluide de refroidissement dans le condenseur (8) en amont de la pompe à vide (6),
**caractérisé en ce que**
le fluide de refroidissement gazeux soutiré du cryostat (3) au moyen de la pompe à vide (6) est comprimé dans un compresseur (14) dans le condenseur (8), puis refroidi dans un échangeur de chaleur (15) avec un agent de refroidissement externe, détendu au niveau d'un organe de détente (17) et amené à un séparateur (18) pour séparer une phase gazeuse d'une phase liquide, le fluide de refroidissement provenant de la phase gazeuse du séparateur (18) étant mis en contact thermique dans un échangeur de chaleur à contre-courant (16) avec le fluide de refroidissement comprimé en aval du compresseur (14) et en amont de l'organe de détente (17), et le fluide de refroidissement provenant de la phase liquide du séparateur (18) étant amené à l'organe d'étranglement (9) .

2. Procédé selon la revendication 1, **caractérisé en ce que** le fluide de refroidissement gazeux passe par une étape de refroidissement entre la pompe à vide (6) et le condenseur (8).

3. Procédé selon la revendication 1 ou 2, **caractérisé en ce que** le fluide de refroidissement gazeux est mis en contact thermique en aval du cryostat (3) avec le fluide de refroidissement gazeux provenant du cryostat (3) en amont de la pompe à vide (6).

4. Procédé selon l'une quelconque des revendications précédentes, **caractérisé en ce que** l'on utilise en tant que fluide de refroidissement un fluide gazeux à pression normale, de préférence de l'azote, un gaz rare, de l'argon, du néon, de l'hélium, de l'hydrogène, du gaz naturel liquéfié (GNL) ou de l'air.

5. Procédé selon l'une quelconque des revendications précédentes, **caractérisé par** l'utilisation pour refroidir des éléments supraconducteurs.

6. Dispositif pour refroidir un consommateur avec un fluide de refroidissement, avec un cryostat (3) dans lequel un fluide de refroidissement cryogénique est présent dans une phase liquide (10) en contact thermique avec un consommateur (5) par l'intermédiaire d'un échangeur de chaleur (4) et une phase gazeuse (11), et avec une pompe à vide (6) en liaison d'écoulement avec la phase gazeuse (11) dans le cryostat (3) par l'intermédiaire d'une section de conduite (12), qui est en liaison d'écoulement côté aval avec un condenseur (8) par l'intermédiaire d'une section de conduite (13), et le condenseur (8) est en liaison d'écoulement côté aval avec le cryostat (3) par l'intermédiaire d'une section de conduite (19) équipée d'un organe d'étranglement (9), un échangeur de chaleur avec une surface d'échange de chaleur (20) étant prévu dans une conduite (21, 22) menant du cryostat (3) à la pompe à vide (6), au niveau duquel le fluide de refroidissement gazeux guidé par cette conduite peut être relié thermiquement au fluide de refroidissement dans le condenseur (8),
**caractérisé en ce que**
le condenseur (8) présente un compresseur (14) pour comprimer le fluide de refroidissement amené à partir de la pompe à vide (6), un échangeur de chaleur (15) alimenté par un agent de refroidissement externe pour dissiper au moins partiellement la chaleur de compression introduite par le compresseur (14) dans le fluide de refroidissement, un organe de détente (17) pour détendre le fluide de refroidissement comprimé, un séparateur (18) pour séparer une phase liquide d'une phase gazeuse du fluide de refroidissement détendu et une conduite de retour équipée d'un échangeur de chaleur à contre-courant (16) pour la mise en contact thermique avec le fluide comprimé provenant du compresseur (14) pour renvoyer le fluide de refroidissement de la phase gazeuse du séparateur (18) vers le côté amont du compresseur et une conduite (19) pour transporter le fluide de refroidissement recondensé de la phase liquide du séparateur (18) vers l'organe d'étranglement (9).

7. Dispositif selon la revendication 6, **caractérisé en ce qu'**un appareil de refroidissement (7) est prévu dans la section de conduite (13) s'étendant de la pompe à vide (6) au condenseur (8).

8. Dispositif selon la revendication 6 ou 7, **caractérisé en ce qu'**il est prévu en amont de la pompe à vide (6) un échangeur de chaleur (26) dans lequel le fluide de refroidissement gazeux provenant de la section de conduite (13) entre la pompe à vide (6) et le condenseur (8) peut être mis en contact thermique avec le fluide de refroidissement gazeux provenant du cryostat (3) .

9. Dispositif selon l'une quelconque des revendications 6 à 8, **caractérisé en ce qu'**il est prévu dans le condenseur (8) une surface d'échange de chaleur (31) au niveau de laquelle le fluide de refroidissement traversant le condenseur (8) peut être mis en contact thermique avec un caloporteur cryogénique externe amené par l'intermédiaire d'une conduite d'alimentation (30) depuis une source (29).
